# EUROPEAN PATENT SPECIFICATION

(11) **EP 1 920 919 B1**
(45) Date of publication and mention of the grant of the patent: **28.11.2012**
(21) Application number: 06796929.5
(22) Date of filing: 29.08.2006
(51) Int. Cl.: B32B 27/28, B32B 25/08, B32B 27/32, B65D 65/40, B32B 27/08, B32B 27/30

(54) **PACKAGING LAYERED MATERIAL**
GESCHICHTETES VERPACKUNGSMATERIAL
MATERIAU D'EMBALLAGE STRATIFIE

(30) Priority: 31.08.2005 JP 2005251944
(43) Date of publication of application: 14.05.2008
(73) Proprietor: Tetra Laval Holdings & Finance S.A., 1009 Pully (CH)
(72) Inventor: FRISK, Peter, Tokyo 102-8544 (JP)
(74) Representative: Müller Schupfner & Partner
(86) International application number: PCT/JP2006/316949
(87) International publication number: WO 2007/026681

(56) References cited:
- WO-A1-03/095200
- JP-A- 05 338 098
- JP-A- 2001 294 836
- JP-A- 2004 331 207
- JP-A- 2005 035 233
- US-A- 5 866 267

## Description

### [Technical Field]

The present invention relates to a laminated packaging material used in a paper-made packaging container in which a fluid food such as juice or milk is filled.

### [Background Technology]

A paper-made packaging container for a drink or a fluid food such as milk, juice, or mineral water is made from a laminated packaging material having the laminated structure of, for instance, low density polyethylene (LDPE)/print ink layer/paper base layer(fibrous carrier layer)/LDPE (extruded laminate layer for adhesion)/LDPE/LDPE; LDPE/print ink layer/paper base layer/LDPE/LDPE; print ink layer/LDPE/paper base layer/LDPE/LDPE; or LDPE/print ink layer/paper base layer/LDPE/aluminum foil/polyester (PET).

A laminated packaging material is generally manufactured by setting a feed paper roll for the paper base layer, printing necessary information on a surface of the feed paper, again winding up the feed paper into a roll, delivering the feed paper roll to an extrusion laminator, extruding, for instance, molten polyolefin (such as LDPE) from the extruder onto a surface of the feed paper, and furthermore extruding molten polyolefin, if there is a gas barrier layer (such as aluminum foil) in addition to the feed paper, between the feed paper and the gas barrier layer for laminate coating. When the gas barrier layer is laminated or any other functional layer is added, the layers are not laminated all at once, but each laminated body is prepared independently, and the feed paper is again wound up into a roll, and then another laminated body is further laminated. The final laminated packaging material is obtained by repeating the process sequence described above.

The layers in the laminated packaging material have different reactions and functions respectively. Liquid-tight plastic coating is provided on both surface of the paper (fibrous) base layer to effectively protect the fibrous base layer, which is apt to easily absorb a fluid, from moisture penetration. The outer laminated layers generally provides the excellent heat sealing capability, and are made from thermoplastic materials such as low density polyethylene as described above.

A laminated packaging material having only the paper base layer and outer layers made from a thermoplastic layer, however, has a low mechanical strength, and can hardly preserve a content's quality. For preserving a content's quality, the laminated packaging material is required to have the flavor-preserving capability of preventing a flavor or a taste of a content product from permeating the material and scattering to the outside, preventing the packaging material contacting a content product from absorbing the flavor or taste, or preventing smelling materials contained in the packaging material from oozing into the content product to spoil the flavor or the taste, and the gas barrier capability for protecting a content product by preventing a gas (such as an oxygen gas) spoiling the content's quality from permeating a laminated material wall of the packaging container, and a material having the flavor-preserving capability and the gas barrier capability is preferable.

As the gas barrier material capable of giving the gas barrier capability to a packaging material, there have been known materials having the excellent oxygen gas blocking capability on which such materials as aluminum foil, EVOH (ethylene vinyl alcohol, namely a saponified ethylene-vinyl acetate random copolymer), PVOH (polyvinyl alcohol), or an inorganic oxide are deposited.

Of the gas barrier materials described above, the EVOH has the features that a portion having a high electron density and a portion having a low electron density are clearly separated from each other in the molecule and has the high polarity, and that the substance does not have affinity with such a gas as an oxygen gas not having polarity like the relation between water and oil. In addition, hydroxyl groups in the molecule strongly attract each other and there is substantially no space between the polymer molecules, and the crystallinity is very high. Because of the features, a gas can hardly pass through the EVOH (Refer to Patent document 1).

Polyethylene used as a laminated body in a paper-made packaging container for a fluid food is generally low density polyethylene (LDPE), and preferably a low density polyethylene produced by the high-pressure method.
Also a linear low density polyethylene (LLDPE) is used. Especially, since an ethylene-α olefin copolymer prepared by polymerization with metallocene (generally referred to as metallocene PE or mLLDPE) can be used for sealing at a low temperature and also can easily be processed to a film, and also because the molecular weight distribution is narrow, the material is preferable from the view point of sanitary and can be applied to preparation of containers (Refer to Patent document 2).

[Patent document 1] Japanese Patent Laid-Open Publication No. SHO 63-312143
[Patent document 2] Japanese Patent Laid-open Publication No. HEI 7-26079
WO 03/095200 relates to a packaging laminate comprising a core layer of paper or carton with through-going holes, openings or slits, a layer of thermoplastics applied onto one outer side of the core layer, an aluminium foil applied onto the other, inner, side of the core layer, extending throughout the laminate, and bonded to the core layer by means of an intermediate layer of thermoplastics, the two layers of thermoplastics both extending throughout the laminate and being sealed to each other within the regions of the holes to form a membrane of aluminium foil and thermoplastics, and one or more layers of thermoplastics applied onto the other, inner, side of the aluminium foil.
US 5,866,267 relates to a multilayer oriented film including a thermoplastic polyolefin (TPO) in the film structure.
JP 2005 035233 discloses a packaging material including an outermost polyolefin layer, a paper base material and an innermost heat-sealable layer in this order.
JP 2004 331207 discloses a multilayer packaging material having a multilayer film including a layer structure composed by disposing a layer of linear low-density polyethylene on both side surfaces a layer containing the saponified ethylene-vinyl acetate copolymer composition directly or through an adhesive layer.
JP 2001 294836 discloses an adhesive resin composition comprising a modified polypropylene obtained by graft-modifying the whole or a part of a propylene homopolymer or a propylene-α-olefin copolymer, with an unsaturated carboxylic acid or a derivative thereof, an ethylene-α-olefin copolymer and a linear low-density polyethylene.
JP 05 338098 relates to a multi-layer laminated structural material having a primary material layer mainly composed of a polyethylene resin on the outer side of said structural material and an ethylene-vinyle acetate saponified substance-type resin layer, or a nitrile-type resin layer, on the inner side of said structural material, and both the layers are laminated together via an adhesive layer.

### [Disclosure of the Invention]

### [Problems to be solved by the Invention]

An object of the present invention is to provide a laminated packaging material having a simplified laminated structure with the gas blocking capability, the enhanced inter-layer adhesion between a barrier layer and an adjoining layer and capable of maintaining the sealing strength of a sealant layer which is an innermost layer.

### [Means for Solving the Problems]

For solving the problems as described above, the laminated packaging material according to the present invention has an outer layer made from thermoplastic resin, a base material layer (paper, synthetic paper, film made from polypropylene with inorganic fine particles such as talc or calcium carbonate mixed therein, and the like), a gas barrier layer, a sealant layer, and optionally one or more of a first and a second adhesion layer. The gas barrier layer is made from a saponified ethylene-vinyl acetate random copolymer, the layer contacting at least an inner side of the gas barrier layer be it the optional first and second adhesion layers or the sealant layer is made from a polymer having the sea island structure in which 92 to 98 weight % of linear low density polyethylene and 2 to 8 weight % of thermoplastic elastomer are blended with each other, and in the case of the adhesion layers the thermoplastic elastomer has the affinity with a hydroxyl group and/or a polarized group of saponified random ethylene-vinyl acetate copolymer in the gas barrier layer.

In a preferable aspect of the present invention, the laminated packaging material has at least an outer layer made from a thermoplastic material, a base layer, a gas barrier layer, a first adhesion layer, and a sealant layer, and the first adhesion layer adjoins the gas barrier layer from the inner side and is made from a blend polymer having the sea island structure in which 92-98 weight % linear low density polyethylene and 2 to 8 weight % of thermoplastic elastomer are blended with each other, and the sealant layer is made from linear low density polyethylene.

In a preferable aspect of the present invention, the sealant layer adjoins the gas barrier layer from the inner side and is made from a blend polymer having the sea island structure in which 92-98 weight % linear low density polyethylene and 2 to 8 weight % of thermoplastic elastomer are blended with each other.

In a preferable aspect of the present invention, the laminated packaging material has at least, an outer layer made from a thermoplastic material, a base layer, a second adhesion layer, a gas barrier layer, a first adhesion layer, and a sealant layer, and the first and second adhesion layers are made from a blend polymer having the sea island structure in which 92-98 weight % linear low density polyethylene and 2 to 8 weight % of thermoplastic elastomer are blended with each other, and the sealant layer is made from linear low density polyethylene.

In a preferable aspect of the present invention, the laminated packaging material has at least an outer layer made from a thermoplastic material, a base layer, a second adhesion layer, a gas barrier layer, and a sealant layer, and the sealant layer adjoins the gas barrier layer from the inner side, and is made from a blend polymer in which 92-98 weight % linear low density polyethylene and 2 to 8 weight % of thermoplastic elastomer are blended with each other.

### [Effect of the Invention]

With the present invention as described above, the following advantageous effects are obtained.
The laminated packaging material according to the present invention has an outer layer made from a thermoplastic material, a base layer, a gas barrier layer, and a sealant layer contributing, for instance, to heat sealing. The outer layer made from a thermoplastic material effectively protects the base layer having the tendency to absorb moisture from the outside from infiltration of external moisture and gives the heat sealing capability to the packaging material. The base layer insures a mechanical strength of the packaging container and defines a form of the container.
In the gas barrier layer made from a saponified ethylene-vinyl acetate random copolymer of ethylene and vinyl acetate (EVOH), a portion having a high electron density and a portion having a low electron density are clearly separated from each other and the polarity is high, so that the layer does not have affinity with oxygen gas not having polarity, and therefore hydroxyl (OH) groups in the polymer strongly attract each other and there is little space in the layer. Because of the features described above, the oxygen gas can not easily pass through the barrier layer.

In this laminated packaging material according to the present invention, a layer adjoining at least an inner surface of the gas barrier layer is made from a blend polymer having the seal island structure in which 92-98 weight % linear low density polyethylene and 2 to 8 weight % of thermoplastic elastomer are blended with each other. A quantity of thermoplastic elastomer blended therein is small, and the elastomer has no or little compatibility, so that a sea island structure is provided in which the linear low density polyethylene is the sea and the thermoplastic elastomer is an island.
Since the layer has the sea island structure, characteristics of the linear low density polyethylene and those of the thermoplastic elastomer are shown concurrently.
Also the feature of the thermoplastic elastomer in the laminated packaging material according to the present invention that the gas barrier layer has the affinity with a hydroxyl group and/or a polarized group in the saponified ethylene-vinyl acetate random copolymer is preserved in the layer.
Because of the affinity, the thermoplastic elastomer in the layer adjoining the gas barrier layer chemically bonds with a hydroxyl group and/or a polarized group in the EVOH at an interface with the gas barrier layer (EVOH) to generate an adhesion force.

In a preferable aspect of the present invention, the laminated packaging material has a first adhesion layer, and the first adhesion layer is made from a blend polymer having the sea island structure including a large quantity of linear low density polyethylene and a small quantity of thermoplastic elastomer, and the sealant layer is made from linear low density polyethylene.
The thermoplastic elastomer in the first adhesion layer provides the adhesiveness with the EVOH and can unevenly be distributed near an interface with the gas barrier layer (EVOH).
On the other hand, since the linear low density polyethylene is present not only in the sealant layer, but also in the first adhesion layer, polyethylene which is used by a relatively large amount for heat sealing is supplied also from the first adhesion layer, which insures tight sealing.

In an aspect in which the sealant layer adjoins the gas barrier layer from the inner side and is made from a blend polymer having the sea island structure containing linear low density polyethylene and a small quantity of a blend polymer having the sea island structure, the adhesion layer and the sealant layer, which are separated from each other in the conventional technology, can be integrated into a one-layered structure, and such manufacturing steps as co-extrusion and dry lamination are not required.

In an aspect of the present invention in which the first and second adhesion layers adjoining the gas barrier layer are made from a blend polymer having the sea island structure in which linear low density polyethylene and a small quantity of thermoplastic elastomer are blended with each other, and the sealant layer is made from linear low density polyethylene, the thermoplastic elastomer in the adhesion layer provides the adhesiveness with the EVOH and can be.unevenly distributed near an interface with the gas barrier layer (EVOH).
On the other hand, the linear low density polyethylene is present not only in the sealant layer, but also in the first adhesive layer, and therefore polyethylene used for heat sealing by a relatively large quantity can be supplied also from the first adhesion layer, which contributes to tight sealing.
In this specification, the blend.polymer having the sea island structure in which a linear low density polyethylene and a small quantity of thermoplastic elastomer is sometimes referred to as "Bl".

### [Brief Description of the Drawings]

[FIG. 1]

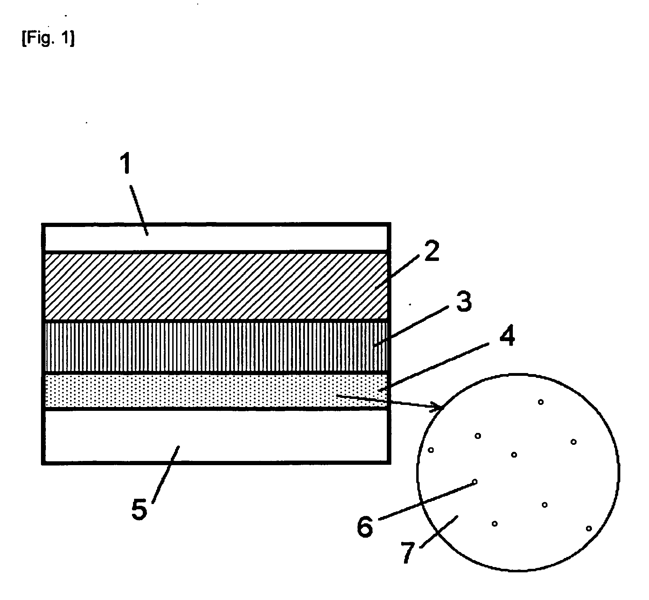

   FIG. 1 is a partially-enlarged general cross-sectional view illustrating a laminated packaging material according to an embodiment of the present invention

### [Description of Signs]

- 1:: Outer layer made from thermoplastic resin
- 2:: Base layer
- 3:: Gas barrier layer
- 4:: BI-containing adhesion layer
- 5:: Sealant layer
- 6:: Thermoplastic elastomer
- 7:: Linear low density polyethylene

### [Best Mode for Carrying out the Invention]

An embodiment of the present invention is described in detail below with reference to the drawings.
A layered structure of the laminated packaging material according to the embodiment of the present invention includes, for instance;
an outer layer made from thermoplastic resin/ a base layer/ an EVOH layer/ a BI-containing sealant layer;
an outer layer made from thermoplastic resin/ a base layer/ an EVOH layer/ a BI-containing adhesion layer/ a sealant layer;
an outer layer made from thermoplastic resin/ a base layer/ an EVOH layer/ a BI-containing adhesion layer/ a sealant layer;
an outer layer made from thermoplastic resin/ a base layer/ BI-containing adhesion layer/ an EVOH layer/ a BI-containing adhesion layer/ a sealant layer; or
an outer layer made from thermoplastic resin/ a base layer/ BI-containing adhesion layer/ an EVOH layer 3/a BI-containing sealant layer 5.
FIG. 1 is a partially-enlarged cross-sectional view illustrating a laminated packaging material according to an embodiment of the present invention, and the laminated packaging material has the layer structure of an outer layer made from thermoplastic resin 1/ a base layer 2/ an EVOH layer 3/ a BI-containing adhesion layer 4/ a sealant layer 5.
The BI-containing adhesion layer 4 is made from a blend polymer having the sea island structure in which linear low density polyethylene 7 and a small quantity of thermoplastic elastomer 6 are blended.
In the laminated packaging material according to the embodiment of the present invention, the base layer includes paper, synthetic paper, a film in which talc or calcium carbonate is mixed with polypropylene, or the like.

In the laminated packaging material according to the embodiment of the present invention, the thermoplastic elastomer is blended with a small quantity of linear low density polyethylene to form the sea island structure.
The thermoplastic elastomer, which can be used in the present invention, includes, but not limited to a styrene-based thermoplastic elastomer (SBC), vinyl chloride-based thermoplastic resin (TPVC), olefin-based thermoplastic resin (TPO), urethane-based thermoplastic resin (PU), polyester-based thermoplastic resin, nitrile-based thermoplastic resin, polyamide-based thermoplastic resin (TPAE), fluorine-based thermoplastic resin, polyethylene chloride-based thermoplastic resin (CPE), and hydrogen-added styrene-based thermoplastic resin.
The thermoplastic elastomer according to the present invention has the affinity with a hydroxyl group and/or a polarized group in a saponified ethylene-vinyl acetate random copolymer in the gas barrier layer.
The thermoplastic elastomer according to the embodiment of the present invention has a blending quantity of linear low density polyethylene in the range from 92 to 98 weight % and that of thermoplastic elastomer in the range from 2 to 8 weight %. The blending quantity of the thermoplastic elastomer is preferably in the range from 3 to 6 weight %.

In the laminated packaging material according to the present invention, the thermoplastic material laminated as an outer layer on a surface of the laminated packaging material is, for instance, polyolefin-based resin such as polyethylene, polypropylene, ethylene-based copolymer, and in addition to the low density polyethylene (LDPE) used in the conventional technology, such materials as linear low density polyethylene (LLDPE), intermediate density polyethylene may be used to form a co-extruded film.

In the laminated packaging material according the present invention, the linear low density polyethylene has a narrow molecular weight distribution. The linear low density polyethylene is, for instance, that polymerized with metallocene and having a narrow molecular weight distribution (mLLDPE) and a blend polymer containing the linear low density polyethylene. As the mLLDPE, it is possible to use an ethylene-α olefin copolymer polymerized with catalyst based on a combination of a metallocene complex and alumoxane such as a combination of zirconocene dichloride and methyl alumoxane, namely with metallocene catalyst.
As the mLLDPE-based resin, there are, for instance, "Kernell" (tradename, a product produced by Mitsubishi Chemical Corp.), "Evolu" (tradename, produced by Mitsui Petrochemical Industry Co.), "EXACT" (tradename, produced by Exxon Chemical Corp. in USA, "AFFINITY" (tradename, produced by DOWCHEMICAL in USA), and "ENGAGE" (tradename, produced by DOWCHEMICAL in USA).

The laminated packaging material according to the present invention is produced by a method such as extrusion, dry lamination, and preferably by co-extrusion. For obtaining sufficient adhesiveness, a surface of the layer and/or a surface of the base material may be activated by preprocessing with corona, flame, or ozone just before or during the processing step above.

### Example

This invention is explained by the following examples concretely.

### [Example 1]

Low density polyethylene by high pressure process (density =0.920 g/cm³, Ml =5.1) is extrusion coated at extrusion temperature 330 degrees Celsius on paper base material (basis weight =320 g/m²) at thickness 20 micron and the low density polyethylene outer layer is laminated.
On the inside reverse face of the paper base material, a EVOH layer of extrusion grade EVOH resin and, a Bl-containing sealant layer comprising 4 weight % vinyl chloride-based thermoplastic resin (TPVC) and 96 weight % blend polymer blended with linear low density polyethylene (mLLDPE) polymerized by metallocene catalyst and low density polyethylene polymerized by high pressure process are co-extruded in layer thickness of 10 micron and 30 micron, respectively.
Layer structure of the obtained packaging material is low density polyethylene outer layer (20 micron) / paper base material layer /EVOH layer (10 micron) / Bl-containing sealant layer (30 micron).
A gable top container is formed from the packaging material. The gable top container is evaluated.

### [Example 2]

Low density polyethylene by high pressure process (density =0.920 g/cm³, Ml =5.1) is extrusion coated at extrusion temperature 330 degrees Celsius on paper base material (basis weight =320 g/m²) at thickness 20 micron and the low density polyethylene outer layer is laminated.
On the inside reverse face of the paper base material, the EVOH layer of the extrusion grade EVOH resin, a BI-containing sealant layer comprising 6 weight % polar group-modified styrene-base thermoplastic elastomer (SBC) and 94 weight % linear low density polyethylene (mLLDPE) polymerized by metallocene catalyst and a sealant layer of blend polymer blended with linear low density polyethylene (mLLDPE) polymerized by metallocene catalyst and low density polyethylene polymerized by high pressure process are co-extruded in layer thickness of 10 micron, 2 micron and 30 micron, respectively.
Layer structure of the obtained packaging material is low density polyethylene outer layer (20 micron) / paper base material layer /EVOH layer (10 micron) / BI-containing adhesive layer (2 micron)/ sealant layer (30 micron).
A gable top container is formed from the packaging material. The gable top container is evaluated.
The polar group modifying thermoplastic elastomer includes carboxyl group, amino group, cyan group, hydroxyl group and carbonyl group.

### [Example 3]

Low density polyethylene by high pressure process (density =0.920 g/cm³, MI =5.1) is extrusion coated at extrusion temperature 330 degrees Celsius on paper base material (basis weight =320 g/m²) at thickness 20 micron and the low density polyethylene outer layer is laminated.
On the inside reverse face of the paper base material, a film of a EVOH film (10 micron) and, a Bl-containing sealant layer (30 micron) comprising 8 weight % urethane-based thermoplastic resin (PU) and 92 weight % linear low density polyethylene (mLLDPE) polymerized by metallocene catalyst are laminated with the Bl-containing adhesive layer (10 micron).
Layer structure of the obtained packaging material is low density polyethylene outer layer (20 micron) / paper base material layer / BI-containing adhesive layer (10 micron)/.EVOH layer (10 micron) / Bl-containing sealant layer (30 micron).
A gable top container is formed from the packaging material. The gable top container is evaluated.

### [Example 4]]

Low density polyethylene by high pressure process (density =0.920 g/cm³, MI =5.1) is extrusion coated at extrusion temperature 330 degrees Celsius on paper base material (basis weight =320 g/m²) at thickness 20 micron and the low density polyethylene outer layer is laminated.
On the inside reverse face of the paper base material, a film of a EVOH film (10 micron) and, a Bl-containing adhesive layer (2 micron) comprising 3 weight % nitrile-based thermoplastic resin, 97 weight % linear low density polyethylene (mLLDPE) polymerized by metallocene catalyst and a sealant layer (30 micron) of blend polymer blended with linear low density polyethylene (mLLDPE) polymerized by metallocene catalyst and low density polyethylene polymerized by high pressure process are laminated with the Bl-containing adhesive layer (2 micron) comprising 3 weight % nitrile-based thermoplastic resin, 97 weight % linear low density polyethylene (mLLDPE) polymerized by metallocene catalyst.
Layer structure of the obtained packaging material is low density polyethylene outer layer (20 micron) / paper base material layer / Bl-containing adhesive layer (2 micron)/ EVOH layer (10 micron) / Bl-containing adhesive layer (2 micron)/ sealant layer (30 micron).
A gable top container is formed from the packaging material. The gable top container is evaluated.

### [Comparative example 1]]

Except using a sealant layer containing no thermoplastic elastomer, a packaging material is obtained as Example 1. A gable top container is formed from the packaging material. The gable top container is evaluated.
Layer structure of the obtained packaging material is low density polyethylene outer layer (20 micron) / paper base material layer /EVOH layer (10 micron) // sealant layer (30 micron).
In addition, since the EVOH layer and the sealant layer have weak adhesive, they are preprocessed conventionally by corona treatment.

In comparison with Comparative example, Examples have stronger seal strength than one the Comparative example.
Therefore, in order to strengthen seal strength of Comparative example to seal strength of Example, the layer thickness of the sealant layer of Comparative example is thicker and an amount of the used materials. Increases.
In addition, the sea island structure of the linar low density polyethylene and thermoplastic elastomer is observed with an enlarged photograph to a section of the BI containing sealant layer of Example 1.

The present invention is not limited to the embodiment described above, and various modifications are possible without departing from the gist of the present invention, and the modifications are also within a scope of the present invention.

### [Industrial Availability]

The laminated packaging material according to the present invention can be applied to a packaging container for a fluid food such as juice or milk.

## Claims

1. A laminated packaging material comprising an outer layer made from thermoplastic resin, a base material layer, a gas barrier layer, a sealant layer, and optionally one or more of a first and a second adhesion layer,
wherein the gas barrier layer is made from a saponified ethylene-vinyl acetate random copolymer,
wherein, if present, the first adhesion layer adjoins the inner surface of the gas barrier layer, and the second adhesion layer adjoins the outer surface of the gas barrier layer, the first and second adhesion layers being made from a blend polymer having the sea island structure in which 92 to 98 weight % of linear low density polyethylene and 2 to 8 weight % of thermoplastic elastomer are blended, and the thermoplastic elastomer has the affinity with a hydroxyl group and/or a polarized group in the saponified ethylene-vinyl acetate random copolymer in the gas barrier layer, and
wherein the sealant layer is made from a linear low density polyethylene when the first adhesion layer is present, and
wherein the sealant layer is made from a blend polymer having the sea island structure in which 92 to 98 weight % of linear low density polyethylene and 2 to 8 weight % of thermoplastic elastomer are blended when the first adhesion layer is absent.

2. The laminated packaging material according to claim 1 comprising at least an outer layer made from thermoplastic resin, a base material layer, a gas barrier layer, a first adhesion layer, and a sealant layer,
wherein the first adhesion layer adjoins the gas barrier layer from the inner side and is made from a blend polymer having the sea island structure in which 92 to 98 weight % of linear low density polyethylene and 2 to 8 weight % of thermoplastic elastomer are blended, and the sealant layer is made from a linear low density polyethylene.

3. The laminated packaging material according to claim 1,
wherein the sealant layer adjoins an inner surface of the gas barrier layer and is made from a blend polymer having the sea island structure in which 92 to 98 weight % of linear low density polyethylene and 2 to 8 weight % of thermoplastic elastomer are blended.

4. The laminated packaging material according to claim 1 comprising at least an outer layer made from thermoplastic resin, a base material layer, a second adhesion layer, a gas barrier layer, a first adhesion layer, and a sealant layer,
wherein the first and second adhesion layers adjoin the gas barrier layer and are made from a blend polymer having the sea island structure in which 92 to 98 weight % of linear low density polyethylene and 2 to 8 weight % of thermoplastic elastomer are blended, and the sealant layer is made from a linear low density polyethylene.

5. The laminated packaging material according to claim 1 comprising at least an outer layer made from thermoplastic resin, a base material layer, a second adhesion layer, a gas barrier layer, and a sealant layer,
wherein the second adhesion layer adjoins the gas barrier layer and the sealant layer is made from a polymer blend having the sea island structure in which 92 to 98 weight % of linear low density polyethylene and 2 to 8 weight % of thermoplastic elastomer are blended.

## Patentansprüche

1. Geschichtetes Verpackungsmaterial, umfassend eine äußere Schicht hergestellt aus thermoplastischem Harz, eine Grundmaterialschicht, eine Gasbarriereschicht, eine versiegelnde Schicht und optional eine oder mehrere einer ersten und einer zweiten Adhäsionsschicht,
wobei die Gasbarriereschicht aus einem verseiften Ethylenvinylacetat-Random-Copolymer hergestellt wird,
wobei, falls vorhanden, die erste Adhäsionsschicht an die innere Oberfläche der Gasbarriereschicht angrenzt, und die zweite Adhäsionsschicht an die äußere Oberfläche der Gasbarriereschicht angrenzt, wobei die erste und die zweite Adhäsionsschicht aus einer Polymermischung mit der Meerinselstruktur hergestellt werden, bei welcher 92 bis 98 Gew.-% lineares Polyethylen niedriger Dichte und 2 bis 8 Gew.-% thermoplastisches Elastomer gemischt werden, und das thermoplastische Elastomer Affinität zu einer Hydroxy-Gruppe und/oder einer polarisierten Gruppe in dem verseiften Ethylenvinylacetat-Random-Copolymer in der Gasbarriereschicht aufweist, und
wobei die versiegelnde Schicht aus einem linearen Polyethylen niedriger Dichte hergestellt wird, wenn die erste Adhäsionsschicht vorhanden ist, und wobei die versiegelnde Schicht aus einer Polymermischung mit der Meerinselstruktur hergestellt wird, bei welcher 92 bis 98 Gew.-% lineares Polyethylen niedriger Dichte und 2 bis 8 Gew.-% thermoplastisches Elastomer gemischt werden, wenn die erste Adhäsionsschicht fehlt.

2. Geschichtetes Verpackungsmaterial nach Anspruch 1, umfassend wenigstens eine äußere Schicht hergestellt aus thermoplastischem Harz, eine Grundmaterialschicht, eine Gasbarriereschicht, eine erste Adhäsionsschicht, sowie eine versiegelnde Schicht,
wobei die erste Adhäsionsschicht an die Gasbarriereschicht von der Innenseite angrenzt und aus einer Polymermischung hergestellt wird,
welche die Meerinselstruktur aufweist, bei welcher 92 bis 98 Gew.-% lineares Polyethylen niedriger Dichte und 2 bis 8 Gew.-% thermoplastisches Elastomer gemischt werden, und die versiegelnde Schicht aus einem linearen Polyethylen niedriger Dichte hergestellt wird.

3. Geschichtetes Verpackungsmaterial nach Anspruch 1,
wobei die versiegelnde Schicht an eine innere Oberfläche der Gasbarriereschicht angrenzt und aus einer Polymermischung hergestellt wird, welche die Meerinselstruktur aufweist, bei welcher 92 bis 98 Gew.-% lineares Polyethylen niedriger Dichte und 2 bis 8 Gew.-% thermoplastisches Elastomer gemischt werden.

4. Geschichtetes Verpackungsmaterial nach Anspruch 1, umfassend wenigstens eine äußere Schicht hergestellt aus thermoplastischem Harz, eine Grundmaterialschicht, eine zweite Adhäsionsschicht, eine Gasbarriereschicht, eine erste Adhäsionsschicht, sowie eine versiegelnde Schicht,
wobei die erste und die zweite Adhäsionsschicht an die Gasbarriereschicht angrenzen und aus einer Polymermischung hergestellt werden, welche die Meerinselstruktur aufweist, bei welcher 92 bis 98 Gew.-% lineares Polyethylen niedriger Dichte und 2 bis 8 Gew.-% thermoplastisches Elastomer gemischt werden, und die versiegelnde Schicht aus einem linearen Polyethylen niedriger Dichte hergestellt wird.

5. Geschichtetes Verpackungsmaterial nach Anspruch 1, umfassend wenigstens eine äußere Schicht hergestellt aus thermoplastischem Harz, eine Grundmaterialschicht, eine zweite Adhäsionsschicht, eine Gasbarriereschicht, sowie eine versiegelnde Schicht,
wobei die zweite Adhäsionsschicht an die Gasbarriereschicht angrenzt und die versiegelnde Schicht aus einer Polymermischung hergestellt wird, welche die Meerinselstruktur aufweist, bei welcher 92 bis 98 Gew.-% lineares Polyethylen niedriger Dichte und 2 bis 8 Gew.-% thermoplastisches Elastomer gemischt werden.

## Revendications

1. Matériau d'emballage stratifié comprenant une couche extérieure faite de résine thermoplastique, une couche d'un matériau de base, une couche formant barrière au gaz, une couche de scellement, et en option une ou plusieurs d'une première et d'une seconde couche d'adhésion,
dans lequel la couche formant barrière au gaz est faite d'un copolymère aléatoire éthylène-vinyle acétate saponifié,
dans lequel, si elle est présente, la première couche d'adhésion est jointive à la surface intérieure de la couche formant barrière au gaz, et la seconde couche d'adhésion est jointive à la surface extérieure de la couche formant barrière au gaz, la première et la seconde couche d'adhésion étant faites d'un mélange de polymères ayant une structure d'îlots en mer dans laquelle 92 à 98 % en poids de polyéthylène linéaire à basse densité et 2 à 8 % en poids d'élastomère thermoplastique sont mélangés, et l'élastomère thermoplastique présente une affinité avec un groupe hydroxyle et/ou un groupe polarisé dans le copolymère aléatoire éthylène-vinyle acétate saponifié dans la couche formant barrière au gaz, et
dans lequel la couche de scellement est faite d'un polyéthylène linéaire à basse densité quand la première couche d'adhésion est présente, et
dans lequel la couche de scellement est faite d'un mélange de polymères ayant la structure d'îlots en mer dans laquelle 92 à 98 % en poids de polyéthylène linéaire à basse densité et 2 à 8 % en poids d'élastomère thermoplastique sont mélangés quand la première couche d'adhésion est absente.

2. Matériau d'emballage stratifié selon la revendication 1, comprenant au moins une couche extérieure faite de résine thermoplastique, une couche d'un matériau de base, une couche formant barrière au gaz, une première couche d'adhésion, et une couche de scellement,
dans lequel la première couche d'adhésion est jointive à la couche formant barrière au gaz depuis le côté intérieur est faite d'un mélange de polymères ayant la structure d'îlots en mer dans laquelle 92 à 98 % en poids de polyéthylène linéaire à basse densité et 2 à 8 % en poids d'élastomère thermoplastique sont mélangés, et la couche de scellement est faite d'un polyéthylène linéaire à basse densité.

3. Matériau d'emballage stratifié selon la revendication 1,
dans lequel la couche de scellement est jointive à une surface intérieure de la couche formant barrière au gaz et est faite d'un mélange de polymères ayant la structure d'îlots en mer dans laquelle 92 à 98 % en poids de polyéthylène linéaire à basse densité et 2 à 8 % en poids d'élastomère thermoplastique sont mélangés.

4. Matériau d'emballage stratifié selon la revendication 1, comprenant au moins une couche extérieure faite de résine thermoplastique, une couche d'un matériau de base, une seconde couche d'adhésion, une couche formant barrière au gaz, une première couche d'adhésion, et une couche de scellement, dans lequel la première et la seconde couche d'adhésion sont jointives à la couche formant barrière au gaz et sont faites d'un mélange de polymères ayant la structure d'îlots en mer dans laquelle 92 à 98 % en poids de polyéthylène linéaire à basse densité et 2 à 8 % en poids d'élastomère thermoplastique sont mélangés, et la couche de scellement est faite d'un polyéthylène linéaire à basse densité.

5. Matériau d'emballage stratifié selon la revendication 1, comprenant au moins une couche extérieure faite de résine thermoplastique, une couche d'un matériau de base, une seconde couche d'adhésion, une couche formant barrière au gaz, et une couche de scellement,
dans lequel la seconde couche d'adhésion est jointive à la couche formant barrière au gaz, et la couche de scellement est faite d'un mélange de polymères ayant la structure d'îlots en mer dans laquelle 92 à 98 % en poids de polyéthylène linéaire à basse densité et 2 à 8 % en poids d'élastomère thermoplastique sont mélangés.
